**Europäisches Patentamt**

**European Patent Office**

**Office européen des brevets**

(11) Publication number : **0 475 919 A2**

# EUROPEAN PATENT APPLICATION

(21) Application number : **91830374.4**

(22) Date of filing : **11.09.91**

(51) Int. Cl.⁵ : **G06F 9/44**

(30) Priority : **13.09.90 IT 8363490**

(43) Date of publication of application :
**18.03.92 Bulletin 92/12**

(84) Designated Contracting States :
**DE FR GB SE**

(71) Applicant : **SGS-THOMSON MICROELECTRONICS s.r.l.**
Via C. Olivetti, 2
I-20041 Agrate Brianza Milano (IT)
(71) Applicant : **POLITECNICO DI TORINO**
Torino (IT)
(71) Applicant : **CONSIGLIO NAZIONALE DELLE RICERCHE**
Piazzale Aldo Moro, 7
I-00198 Roma (IT)

(72) Inventor : **Civera, Pierluigi**
Strada Gran Paradiso, 2
I-10023 Chieri (IT)

Inventor : **Ortelli, Stefano**
Via Como, 31/32
I-20021 Bollate (IT)
Inventor : **Pagni, Andrea**
Viale Legioni Romane, 26
I-20147 Milano (IT)
Inventor : **Piccinelli, Paolo**
Via Mentana, 41
I-20052 Monza (IT)
Inventor : **Piccinini, Gian Luca**
Via Cavalcanti, 1
I-10132 Torino (IT)
Inventor : **Poluzzi, Rinaldo**
Piazza Istria, 2
I-20125 Milano (IT)
Inventor : **Ruo Roch, Massimo**
Via Pio VII, 118
I-10127 Torino (IT)
Inventor : **Zamboni, Maurizio**
Corso Duca Degli Abruzzi, 98
I-10129 Torino (IT)

(74) Representative : **Pellegri, Alberto et al**
c/o Società Italiana Brevetti S.p.A. Via Cavour, 9
I-21100 Varese (IT)

(54) **WIS codification for prolog programs execution.**

(57)   The Warren Instruction Set for the relative abstract machine designed for the execution of Prolog programs is coded by means of a two part opcode. The first part has a fixed, 8-bit format and the second part may have a variable format of 8 or of 32 bits containing the value of a respective register or registers. The fourth and the eighth bit of the first part of the opcode are exploited for interrupting the decoding step, in order to reduce the execution times and for signalling the presence of a second part of opcode with a 32 bit format containing the value of a certain register.

EP 0 475 919 A2

The present invention relates to the systems for the execution of Prolog programs using a compilation technique based upon an instruction set defined by D.H.D. Warren, generally known and referred to as the Warren Instruction Set or by the acronym WIS. In particular the present invention relates to a method of codification of the Warren's set of instructions in which a Prolog program is translated for execution.

The vast amount of calculations required for the execution of a Prolog program makes conventional computers functioning with sensibly larger response times then those normally exhibited in the case of the less sophisticated languages (i.e. C. Pascal).

D.H.D. Warren defined a Prolog oriented abstract machine operating with with a set of basic instructions capable of supporting the execution mechanism of the Prolog programming language. The hardware implementing the so-called Warren abstract machine is composed by four stack memory structures (Environment, Heap, Trail and Push Down List), a code memory and a central processing unit (CPU). In the CPU there are all the registers which refer to the stacks, plus a file register for avoiding memory accesses in the case of the passage of arguments to procedures and in the case of variables for which memory allocation is not strictly necessary (temporary variables). Also the management of the sequence of instructions to execute is more complex than the standard sequence of less sophisticated languages. The strategy of Prolog execution is "Left to Right-Depth First with Backtracking", which implies a more complex procedure for the recovery of the codes. The Program Counter is substituted by two registers (a Program Pointer and a Continuation Pointer) and a queue of instructions waiting to be executed (FIFO) is contemplated for maximizing channel occupation toward the code memory.

In order to execute the WIS instructions at microcode level, the common approach is that of employing a hardware system capable of implementing the so-called WAM (Warren Abstract Machine). According to a standard configuration, the "dedicated" processor is normally used as a coprocessor of a "host" computer or CPU. The "dedicated" coprocessor is normally totally autonomous for the execution of the Prolog program and for this function the intervention of the main "host" CPU is required exclusively for the access to common resources such as "disks, monitors, printers" and in the case of primitives which may not directly be executed within the dedicated system (e.g. arithmetic operations).

Whether the Prolog program is executed by means of a dedicated coprocessor or by means of a specific remicroprogramming of the host machine, a Prolog program, translated in WIS, must be codified in a manner as to permit that the subsequent Fetching, Alignment, Decodification and Execution operations be as efficient as possible, that is be performed in the shortest time as possible. When there is a dedicated processor, it is particularly important to establish a WIS codification capable of permitting an efficient development of the hardware. In fact, during a compiled execution of a Prolog program, the basicelement of computation is the so-called Logic Inference, which requires the execution of an average number comprised between 10 and 15 WIS instructions. In MLIPS (Mega Logical Inference Per Second) oriented machines, it is necessary that the flow of instructions be of at least 15 mega WIS instructions per second. Preferably this number should be further increased by at least 20%, when Prefetching strategies are implemented.

Another requirement of a WIS codification is that of reducing to the minimum the occupation of the memory dedicated to contain the code as well as the number of physical accesses toward the same code memory. Of course these characteristics may be exploited only if the Decodification and the Alignment take place in a sufficiently short time (about 20 nano seconds).

The present invention provides a method of codification of the set of instructions of Warren (WIS) for the execution of the Prolog program by compilation, executed by means of a dedicated coprocessor which cooperates with a main processor of a host computer, which permits to simplify the hardware and to improve the times of execution.

The method of the invention consists in:

identifying each instruction by means of an opcode composed by at least a first part having a fixed 8-bit format, the first three bits, the following four bits and the last bit of which identify the class to which an instruction belongs of six main classes into which the WIS instructions are preliminarily divided, the sub-class to which an instruction belongs within said main class, capable of univocally identifying each instruction of the set, and a flag, respectively;

employing the first of said four bits of univocal identification of each instruction belonging to one of said six main classes for implementing a jump operation through which the decodification phase is interrupted in order to reduce the execution time;

adding at the end of said first part of the opcode with fixed, 8-bit format, for instructions belonging to classes after the first of said six main classes, a second part having a variable format of 8 bits or of 32 bits, which contains the value of a respective register containing a certain parameter;

said last bit of said first part of the opcode signaling the presence of a second part of the opcode with a 32 bit format containing the value of a certain register.

In the following Table I the WIS instructions, clearly divided in six main classes, and the relative opcodes attributed to the instructions, in accordance with the method of the present invention, are listed.

T A B L E   I

| WIS Instructions | Class | Sub-Class | P | Parameters |
|---|---|---|---|---|
| unify_nil | 000 | 0000 | 0 | – |
| deallocate | 000 | 0001 | 0 | – |
| proceed | 000 | 0010 | 0 | – |
| trust_me_else_fail | 000 | 0011 | 0 | – |
| fail | 000 | 0100 | 0 | – |
| cut | 000 | 0101 | 0 | – |
| get_nil | 001 | 0000 | 0 | I |

| | | | | |
|---|---|---|---|---|
| get_list | 001 | 0001 | 0 | I |
| put_nil | 001 | 0010 | 0 | I |
| put_list | 001 | 0011 | 0 | I |
| allocate | 001 | 1101 | 0 | I |
| unify_var_x | 001 | 0110 | 0 | I |
| unify_val_x | 001 | 1000 | 0 | I |
| unify_loc_val_x | 001 | 1001 | 0 | I |
| unify_cdr_x | 001 | 1011 | 0 | I |
| unify_var_y | 001 | 0101 | 0 | N |
| unify_val_y | 001 | 0111 | 0 | N |
| unify_loc_val_y | 001 | 1010 | 0 | N |
| unify_cdr_y | 001 | 1100 | 0 | N |
| unify_void | 001 | 0100 | 0 | J |
| | | | | |
| put_un_val | 010 | 1000 | 0 | IN |
| get_var_y | 010 | 0000 | 0 | IN |
| get_val_y | 010 | 0001 | 0 | IN |
| put_var_y | 010 | 0010 | 0 | IN |
| put_val_y | 010 | 0011 | 0 | IN |
| put_val_x | 010 | 0100 | 0 | IJ |
| get_var_x | 010 | 0101 | 0 | IJ |
| get_val_x | 010 | 0110 | 0 | IJ |
| put_var_x | 010 | 0111 | 0 | IJ |
| | | | | |
| sw_on_term | 011 | 0000 | 0 | WWW |
| | | | | |
| unify_constant | 100 | 0000 | 0 | W |
| try_me_else | 100 | 0001 | 0 | W |
| retry_me_else | 100 | 0010 | 0 | W |
| try | 100 | 1011 | 1 | WP |
| retry | 100 | 1100 | 1 | WP |
| trust | 100 | 1101 | 0 | W |
| cutd | 100 | 0110 | 0 | W |
| escape | 100 | 0111 | 0 | W |
| | | | | |
| call | 101 | 1000 | 1 | JNWP |
| | | | | |
| get_constant | 110 | 0000 | 0 | IW |
| get_struc | 110 | 0001 | 0 | IW |

| | | | | |
|---|---|---|---|---|
| put_constant | 110 | 0010 | 0 | IW |
| put_struc | 110 | 0011 | 0 | IW |
| execute | 110 | 1000 | 0 | JW |
| sw_on_constant | 111 | 0000 | 0 | JSP |
| sw_on_structure | 111 | 0001 | 0 | JSP |

The first part of the opcodes has a fixed length of 8 bits. The first three bits identify the class to which the instruction belongs, which discriminates the instructions on the basis of the number and the length of the operands or parameters, the value of which is expressed in the second part of the opcode having a variable length (8 or 32 bits).

The subsequent four bits univocally identify each single instruction within the respective class. The first sub-class bit, that is the fourth bit of the first, fixed-length part of the opcode, is employed as a jump flag for implementing an interruption of the decodification procedure in order to reduce the overall execution times.

The eighth bit of the first part with fixed 8-bit format of the opcode, indicated with P in TABLE I, is a flag bit which indicates that the value of a respective P register is added into the fetch queue, in said second part of the opcode having a 32 bit format.

For each class of instructions, in the last column of TABLE I, the different 8-bit parameters (operands) I, J, and N and the different 32 bit parameters (operands) P, W, which are associated to the respective WIS instruction are indicated.

The SP parameter represents a tag or address.

The decodification system of the invention permits an efficient execution of the Fetching, Alignment, Decodification and Execution operations.

Fetching

The variable length format of the opcodes, in accordance with the method of the invention, permits to restrict the band necessary for the transfer of the instructions. In fact each single word transferred contains 1.24 WIS instructions.

Alignment

The alignment operation is controlled directly by the first three bits of the opcode which identify the principal class to which the instruction belongs. The three bits are therefore interpreted directly as a selection of the appropriate alignment operations of the fixed format part.

Decodification

The first eight bits of the variable length opcode are utilized for generating the appropriate (decoding) codes of the fixed length format part toward the execution unit.

Execution

The codification system of the invention is such as to explicitly indicate to a pre-fetching unit the operation which may be directly executed at such a pre-fetching level, without further involving the processing unit. The objective is that of unburdening the processing unit from any operation which pertains to the opcodes of the instructions. The information useful for these "pre-executions" is contained in the first sub-class bit (fourth bit) and in the P bit (eighth bit).

**Claims**

1. A method of codification of the Warren Instruction Set (WIS) characterized by:
   identifying each instruction by means of an opcode composed by at least a first part having a fixed 8-bit format, the first three bits, the following four bits and the last bit of which identify the class to which an instruction belongs of six main classes into which the WIS instructions are preliminarily divided, the sub-class to which an instruction belongs within said main class, capable of univocally identifying each instruction of the set, and a flag, respectively;

employing the first of said four bits of univocal identification of each instruction belonging to one of said six main classes for implementing a jump operation through which the decodification phase is interrupted in order to reduce the execution time;

adding at the end of said first part of the opcode with fixed, 8-bit format, for instructions belonging to classes after the first of said six main classes, a second part having a variable format of 8 bits or of 32 bits, which contains the value of a respective register containing a certain parameter;

said last bit of said first part of the opcode signalling the presence of a second part of the opcode with a 32 bit format containing the value of a certain register.

2.  A method of execution of a Prolog program by compilation utilizing the Warren set of basic instructions which are univocally identified by means of an opcode, characterized by:

identifying each instruction by means of an opcode composed by at least a first part having a fixed 8-bit format, the first three bits, the following four bits and the last bit of which identify the class to which an instruction belongs of six main classes into which the WIS instructions are preliminarily divided, the sub-class to which an instruction belongs within said main class, capable of univocally identifying each instruction of the set, and a flag, respectively;

employing the first of said four bits of univocal identification of each instruction belonging to one of said six main classes for implementing a jump operation through which the decodification phase is interrupted in order to reduce the execution time;

adding at the end of said first part of the opcode with fixed, 8-bit format, for instructions belonging to classes after the first of said six main classes, a second part having a variable format of 8 bits or of 32 bits, which contains the value of a respective register containing a certain parameter;

said last bit of said first part of the opcode signalling the presence of a second part of the opcode with a 32 bit format containing the value of a certain register.